# EUROPEAN PATENT SPECIFICATION

(11) **EP 1 818 132 B1**
(45) Date of publication and mention of the grant of the patent: **23.07.2014**
(21) Application number: 06126201.0
(22) Date of filing: 15.12.2006
(51) Int. Cl.: B23K 35/30, C22C 19/05, C22C 19/07, C22C 30/00

(54) **Braze alloy compositions**
Hartlötlegierungszusammensetzungen
Compositions d'alliage de brasage

(30) Priority: 15.12.2005 US 300394
(43) Date of publication of application: 15.08.2007
(60) Divisional application: 13153764.9
(73) Proprietor: GENERAL ELECTRIC COMPANY, Schenectady, NY 12345 (US)
(72) Inventor: Jiang, Liang, Schenectady NY 12303 (US); Cretegny, Laurent, Niskayuna NY 12309 (US); Miglietti, Warren, Greenville SC 29609 (US)
(74) Representative: Szary, Anne Catherine

(56) References cited:
- EP-A- 0 351 948
- EP-A- 1 258 312
- EP-A- 1 258 545
- EP-A1- 0 457 503
- WO-A-02/50323
- WO-A-89/03264
- WO-A-03/025237
- WO-A-2005/054528
- WO-A1-98/45491
- JP-A- 7 300 643
- JP-A- 55 082 742
- JP-A- 61 000 546
- JP-A- 62 093 333
- JP-A- 62 280 341
- JP-A- 63 290 236
- JP-A- 2000 042 755
- US-A- 3 820 961
- US-B1- 6 520 401

## Description

### BACKGROUND OF THE INVENTION

This invention relates to cobalt-based braze alloy compositions.

The nickel-based braze alloys disclosed herein, do not fall part of the invention.

In order to function effectively in a high-temperature environment, heavy alloy components are typically added to strengthen a superalloy. This may result in difficulties for welding joining/repair of superalloy components used in an extreme environment, such as a hot-gas-path airfoil in a gas turbine. Brazing is becoming a more preferred choice for joining/repair of superalloy components as a result of its reduced cost and cycle time. However, it can be challenging to make the braze joints/repair to have certain properties - especially ductility - approaching that of the superalloy substrate material. Generally, a primary obstacle can be the formation of brittle phases in the brazed joint.

Boron has been used extensively in brazing alloys, but brittle borides typically result in poor mechanical properties of the braze joint. A process to improve the mechanical integrity of the braze joint/repaired area generally requires the use of a prolonged diffusion cycle. This approach may reduce the amount of brittle boride phases by homogenization with substrate superalloys or braze powder mixture. This process, however, may require a prolonged cycle time, increasing cost and subjecting the substrate superalloy to thermal degradation.

Braze alloy compositions - and related processes and articles - are described in U.S. Patent No. 4,414,178 to Smith et al.; U.S. Patent No. 5,240,491 to Budinger at al.; U.S. Patent No. 5,735,448 to Draghi et al.; U.S. Patent No. 5,783,318 to Biondo et al.; U.S. Patent No. 6,503,349 to Pietruska et al.; U.S. Patent No. 6,520,401 to Miglietti; U.S. Patent No. 6,530,971 to Cohen et al.; U.S. Patent No. 6,165,290 to Rabinkin; and U.S. Patent App. Pub. No. 20050067061 to Huang et al. Where hafnium is present in a low-weight percentage, it generally acts as a grain boundary strengthener - not as a reducer of the braze alloy composition's melting point.

JP-A-62093333 discloses a high strength and high ductility Ni alloy having high oxidation resistance and made chiefly on an L1₂ type intermetallic compound having a composition consisting of Al, B, Fe, Cr, Hf, Zr and Ni. The composition consisting of, in weight %, 5-9.5 Al, ≤3% B, 1-12% Fe, 0.01-25% Cr, 0.005-22% Hf and/or 0.005-4% Zr and the balance Ni with incidental impurities.

WO 2005/054528 discloses a solder alloy based on nickel which includes the following elements: nickel, chromium, cobalt, molybdenum, aluminum, tantalum, niobium, yttrium, hafnium, palladium, boron and silicon. The multi-component soldering system includes the solder alloy and additionally at least one additive material. The additive materials include the following elements: nickel, chromium, cobalt, molybdenum, aluminum, tantalum, titanium, rhenium, iron, niobium, yttrium, hafnium, palladium, carbon, zirconium, boron and silicon. A specific mixing of solder alloy and additive materials produces a multi-component soldering system that may be specifically adapted to the material of the component to be repaired.

JP-A-61000546 discloses a high-strength heat-resistant Co alloy for a gas turbine with superior hot corrosion resistance by blending Co with specified amounts of C, Si and/or Mn, Cr, Ni, W and/or Mo, Al and Hf. The alloy is composed of, by weight, 0.01-1% C, 0.02-2% Si and/or Mn, 15-40% Cr, 5-15% Ni, 2-12% W and/or Mo, 0.01-3% Al, 0.05-5% Hf and the balance Co with inevitable impurities. One or more of (a) 0.01-5% of Ta, Nb and Ti, (b) 0.005-0.1% B and/or Zr and (c) 0.005-0.1% rare earth elements may be further added to the composition.

JP-A-07300643 discloses a heat resistant cast Co-base alloy excellent in high temperature strength and longtime stability. This alloy has a composition consisting of, by weight ratio, >0.45-0.8% C, 5-15% Ni, 15-30% Cr, 3-10% W, 1-5% Re, 0.01-1% Ti, 0.01-1% Nb, 0.01-1% Zr, ≤1% Si, ≤1% Mn, ≤1.5% Fe, and the balance Co with inevitable impurities and further containing, if necessary, one or more of 1-5% Ta, 0.05-5% Hf, ≤0.1% B, and 0.05-05% Al.

### BRIEF DESCRIPTION OF THE INVENTION

Two exemplary embodiments of braze alloy compositions will be discussed. One exemplary embodiment relates to a nickel-based high-temperature braze alloy composition comprising chromium (Cr), hafnium (Hf), and boron (B). Another exemplary embodiment relates to a cobalt-based high-temperature braze alloy composition comprising Cr, Hf, and B.

In one embodiment, a nickel-based braze alloy composition comprises: 9-25% chromium by weight, and all subranges therebetween; 5-45% hafnium by weight, and all subranges therebetween; and 0.05-6% boron by weight, and all subranges therebetween.

The cobalt-based braze alloy composition consists of : 9-25% chromium by weight, and all subranges therebetween; 10-56% hafnium by weight, and all subranges therebetween; and 0.05-6% boron by weight, and all subranges therebetween, wherein up to 60% of residual cobalt content is substituted by at least one element selected from the group consisting of aluminium, titanium, molybdenum, tungsten, nickel, iron, zirconium, niobium, rhenium, carbon and silicon; and wherein the composition has a solidus temperature of less than 1191°C (2175°C).

### BRIEF DESCRIPTION OF THE DRAWINGS

Embodiments will now be described, by way of example only, with reference to the accompanying drawings, in which:
FIGURE 1 illustrates typical microstructures for nickel-based braze alloys; and
FIGURE 2 illustrates typical microstructures for cobalt-based braze alloys.

### DETAILED DESCRIPTION OF THE INVENTION

The braze alloy composition may be used as a single homogenous braze. Alternatively, the braze alloy composition may be used as a component in, for example, a wide-gap braze mixture where higher or lower melting point superalloy and/or braze powder is used. These braze alloy compositions may permit, for example, joining or repairing of superalloy articles with complex shapes and high temperature applications. Furthermore, the braze alloy compositions may provide for enhanced ductility.

In general terms, the boron and hafnium are coupled to suppress the solidus temperature, and the chromium, hafnium, and boron are coupled to suppress the liquidus temperature. In addition, the added chromium may provide, for example, oxidation and corrosion resistance of the brazing alloy. A boron-, chromium-, and hafnium-containing intermetallic compound may be more ductile than chromium-, tungsten-, and nickel-containing borides.

The braze alloy compositions disclosed and claimed herein may permit brazing at high temperatures without degrading the superalloy substrate, may reduce the brittleness of the borides or intermetallic compounds formed during the brazing process, and may improve the mechanical properties (including, for example, ductility) of the braze joint.

In accordance with one exemplary embodiment, a nickel-based braze alloy composition comprises: 9-25% chromium by weight, and all subranges therebetween; 5-45% hafnium by weight, and all subranges therebetween; and 0.05-6% boron by weight, and all subranges therebetween.

In accordance with one exemplary embodiment, the chromium is preferably 9-15% by weight. More preferably, the chromium is 13% by weight. Preferably, the hafnium is 10-30% by weight. More preferably, the hafnium is 15-25% by weight. Even more preferably, the hafnium is 15%, 20%, or 25% by weight. Preferably, the boron is 0.05-3.6% by weight. More preferably, the boron is 1% by weight.

In accordance with another exemplary embodiment, a portion of the residual nickel in the nickel-based braze alloy composition is substituted with at least one element commonly found in superalloys, such as, for example, aluminum, titanium, molybdenum, tungsten, cobalt, iron, zirconium, niobium, rhenium, carbon, and silicon. Preferably, up to 60% of the residual nickel is substituted with at least one element commonly found in superalloys. More preferably, up to 50% of the residual nickel is substituted with at least one element commonly found in superalloys.

In accordance with another exemplary embodiment, the nickel-based braze alloy composition has a solidus temperature less than 1191°C (2175 °F). More preferably, the nickel-based braze alloy composition has a solidus temperature less than 1149°C (2100 °F). Even more preferably, the nickel-based alloy composition has a solidus temperature less than 1107°C (2025 °F).

In accordance with another exemplary embodiment, the nickel-based braze alloy composition consists of 9-25% chromium by weight; 5-45% hafnium by weight; 0.05-6% boron by weight; and nickel. More preferably, the nickel-based braze alloy composition consists of 9-25% chromium by weight; 10-30% hafnium by weight; 0.05-3.6% boron by weight; and nickel.

The cobalt-based braze alloy composition of the invention consists of : 9-25% chromium by weight, and all subranges therebetween; 10-56% hafnium by weight, and all subranges therebetween; 0.05-6% boron by weight, and all subranges therebetween; balance cobalt wherein up to 60% of residual cobalt content is substituted by at least one element selected from the group consisting of aluminium, titanium, molybdenum, tungsten, nickel, iron, zirconium, niobium, rhenium, carbon and silicon; and wherein the composition has a solidus temperature of less than 1191°C (2175°C).

In accordance with an exemplary embodiment of the invention, the chromium is 15-25% by weight. More preferably, the chromium is 20% by weight. Preferably, the hafnium is 10-30% by weight. More preferably, the hafnium is 10-26% by weight. Even more preferably, the hafnium is 15%, 20%, or 25% by weight. Preferably, the boron is 0.05-4% by weight. More preferably, the boron is 1% by weight.

The cobalt-based braze alloy composition of the invention has a solidus temperature less than 1191°C (2175 °F). More preferably, the cobalt-based braze alloy composition has a solidus temperature less than 1149°C (2100 °F). Even more preferably, the cobalt-based alloy composition has a solidus temperature less than 1107°C (2025 °F).

In accordance with another exemplary embodiment of the invention, the cobalt-based braze alloy composition consists of 9-25% chromium by weight; 5-56% hafnium by weight; and 0.05-6% boron by weight; and cobalt. More preferably, the cobalt-based braze alloy composition consists of 9-25% chromium by weight; 10-26% hafnium by weight; 0.05-4% boron by weight; and cobalt.

In accordance with another exemplary embodiment of the invention, up to 60% of the residual content is substituted by at least one element selected from the group consisting of aluminum, titanium, molybdenum, tungsten, nickel, iron, zirconium, niobium, rhenium, carbon, and silicon. Preferably, up to 50% of the residual cobalt is substituted with at least one of the above mentioned elements.

A person of ordinary skill in the art should understand and recognize that all disclosed and claimed percentages are approximate.

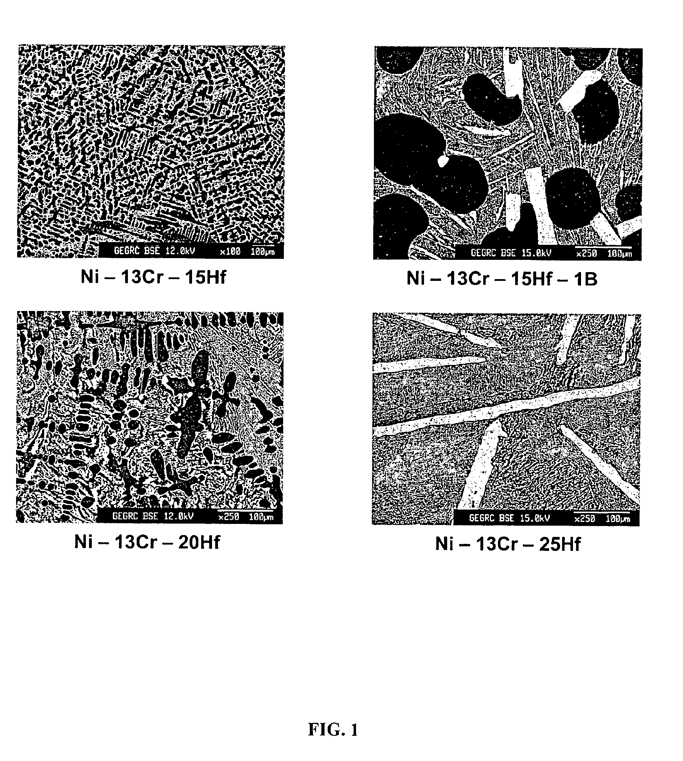

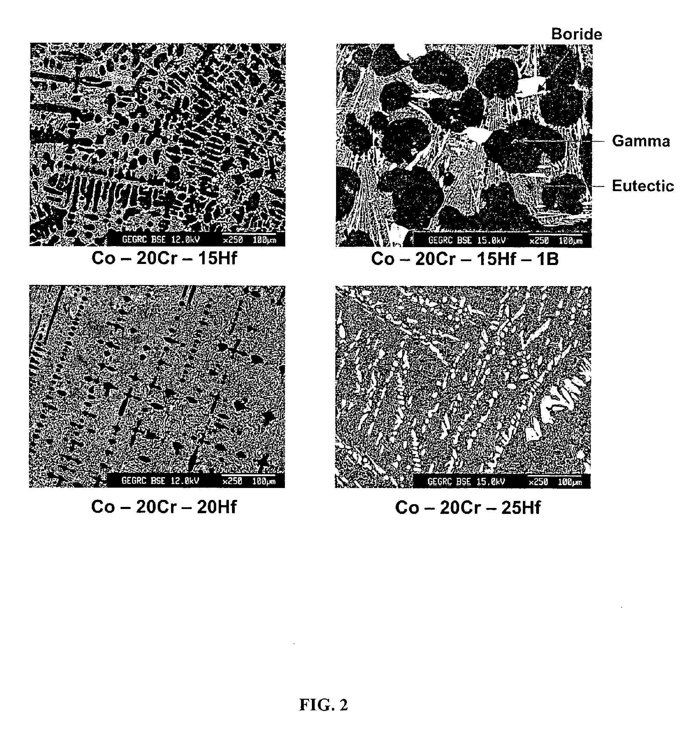

Fig. 1 depicts four nickel-based braze alloy compositions. Fig. 2 depicts four cobalt-based braze alloy compositions.

The following table (Table 1) shows hardness measurements for different phases in certain braze alloy compositions:

**Table 1: Micro-Hardness Results of Hafnium-Containing Braze Alloys**

| | Micro Hardness (HV) | | | | | |
|---|---|---|---|---|---|---|
| | Gamma | | Eutectic | | Boride | |
| Braze Alloy | Ave. | Std. Dev. | Ave. | Std. Dev. | Ave. | Std. Dev. |
| Ni-13Cr-15Hf-1B | 215 | 17 | 576 | 76 | N/A | N/A |
| Ni-13Cr-15Hf | 242 | 19 | 294 | 56 | / | / |
| Ni-13Cr-20Hf | 309 | 19 | 322 | 72 | / | / |
| Ni-13Cr-25Hf | 398 | 32 | 324 | 30 | / | / |
| Ni-13Cr-25Hf-1B | 326 | 93 | 746 | 108 | 1150 | 240 |
| Co-20Cr-15Hf-1B | 433 | 18 | 917 | 53 | 1229 | 84 |
| Co-20Cr-15Hf | 477 | 46 | 658 | 89 | / | / |
| Co-20Cr-20Hf | 565 | 21 | 612 | 61 | / | / |
| Co-20Cr-25Hf | / | / | 1104 | 197 | / | / |
| Co-20Cr-25Hf-1B | 538 | 59 | | | N/A | N/A |

Table 1 exemplifies that boride is typically harder than a hafnium-bearing compound.

The following table (Table 2) shows melting point temperature measurements of certain braze alloy compositions:

**Table 2: DSC Results of Hafnium-Containing Braze Alloys**

| Braze Alloy | Solidus (°F), °C | Liquidus (°F), °C |
|---|---|---|
| Ni-13Cr-15Hf-1B | (2013), 1101 | (2352), 1289 |
| Ni-13Cr-15Hf | (2201), 1205 | (2438), 1287 |
| Ni-13Cr-20Hf | (2228), 1220 | (2380), 1304 |
| Ni-13Cr-25Hf | (2248), 1231 | (2355), 1291 |
| Ni-13Cr-25Hf-1B | (2010), 1099 | (2322), 1272 |
| Co-20Cr-15Hf-1B | (2008), 1098 | (2340), 1282 |
| Co-20Cr-15Hf | (2286), 1252 | (2493), 1367 |
| Co-20Cr-20Hf | (2324), 1273 | (2381), 1305 |
| Co-20Cr-25Hf | (2307), 1264 | (2408), 1320 |
| Co-20Cr-25Hf-1B | (2012), 1100 | (2205), 1207 |

The temperatures in Table 2 are based on differential scanning calorimetry (DSC) heating curve analysis. Table 2 exemplifies that hafnium-containing braze alloys with boron may have beneficial properties.

## Claims

1. A cobalt based braze alloy composition consisting of:
9-25% chromium by weight;
10-56% hafnium by weight;
0.05-6% boron by weight; and
balance cobalt;
wherein up to 60% of residual cobalt content is substituted by at least one element selected from the group consisting of aluminum, titanium, molybdenum, tungsten, nickel, iron, zirconium, niobium, rhenium, carbon, and silicon; and
wherein the composition has a solidus temperature of less than 1191°C (2175° F).

2. The cobalt based braze alloy composition of claim 1 comprising 15-25% chromium by weight.

3. The cobalt based braze alloy composition of claim 1 comprising 10-26% hafnium by weight.

4. The cobalt based braze alloy composition of claim 1 comprising 0.05-4% boron by weight.

## Patentansprüche

1. Hartlötlegierungszusammensetzung auf Cobaltbasis, bestehend aus:
9-25 Gew.% Chrom;
10-56 Gew.% Hafnium;
0,05-6 Gew.% Bor; und
Rest Cobalt;
wobei bis zu 60 % Restcobaltgehalt durch mindestens ein Element ersetzt werden, das aus der Gruppe bestehend aus Aluminium, Titan, Molybdän, Wolfram, Nickel, Eisen, Zirkonium, Niob, Rhenium, Kohlenstoff und Silicium ausgewählt wird; und
wobei die Zusammensetzung eine Solidustemperatur von weniger als 1191 °C aufweist.

2. Hartlötlegierungszusammensetzung auf Cobaltbasis nach Anspruch 1, die 15-25 Gew.% Chrom umfasst.

3. Hartlötlegierungszusammensetzung auf Cobaltbasis nach Anspruch 1, die 10-26 Gew.% Hafnium umfasst.

4. Hartlötlegierungszusammensetzung auf Cobaltbasis nach Anspruch 1, die 0,05-4 Gew.% Bor umfasst.

## Revendications

1. Une composition d'alliage de brasage à base de cobalt constituée de ;
9-25% en poids de chrome ;
10-56% en poids d'hafnium ;
0,05-6% en poids de bore ; et
le solde de cobalt ;
dans laquelle jusqu'à 60% du cobalt restant est substitué par au moins un élément choisi dans le groupe constitué de l'aluminium, du titane, du molybdène, du tungstène, du nickel, du fer, du zirconium, du niobium, du rhénium, du carbone et du silicium ; et
dans laquelle la composition a un solidus de moins de 1191°C (2175°F).

2. La composition d'alliage de brasage à base de cobalt de la revendication 1 comprenant 15-25% en poids de chrome.

3. La composition d'alliage de brasage à base de cobalt de la revendication 1 comprenant 10-26% en poids d'hafnium.

4. La composition d'alliage de brasage à base de cobalt de la revendication 1 comprenant 0,05-4% en poids de bore.
